# FASCICULE DE BREVET EUROPEEN

(11) **EP 2 938 902 B1**
(45) Date de publication et mention de la délivrance du brevet: **04.07.2018**
(21) Numéro de dépôt: 13814841.6
(22) Date de dépôt: 19.12.2013
(51) Int. Cl.: F16G 3/04

(54) **BANDE DE TRANSPORT D'ELEMENTS EN PLAQUE ET MACHINE DE TRANSFORMATION COMPRENANT UNE TELLE BANDE**
FÖRDERBAND ZUM FÖRDERN VON PLATTENFÖRMIGEN GEGENSTÄNDEN UND BEARBEITUNGSMASCHINE MIT SOLCH EINEM BAND
CONVEYOR BELT FOR CONVEYING PLATE-SHAPED ITEMS AND PROCESSING MACHINE COMPRISING SUCH A BELT

(30) Priorité: 28.12.2012 FR 1262946
(43) Date de publication de la demande: 04.11.2015
(73) Titulaire: Bobst Lyon, 69100 Villeurbanne (FR)
(72) Inventeur: CUZIN, Marc, F-69290 St. Genis les Ollieres (FR)
(74) Mandataire: Ehnle, Marcus
(86) Numéro de dépôt international: PCT/EP2013/003866
(87) Numéro de publication internationale: WO 2014/101993

(56) Documents cités:
- EP-A2- 1 477 704
- WO-A1-90/10165
- DE-A1- 3 626 244
- DE-U1-202012 008 090
- JP-A- 2003 156 102

## Description

La présente invention concerne une bande de transport adaptée pour transporter des éléments en plaque dans une machine de transformation de ces éléments en plaque. L'invention concerne une machine de transformation telle qu'une machine d'impression, de pliage et de collage comprenant au moins une telle bande de transport.

La présente invention s'applique au domaine de la transformation de cartons en plaque, c'est-à-dire des feuilles de carton, pour former des boîtes d'emballage ou de caisses. Des éléments en plaque sous la forme de feuilles de carton sont introduits successivement dans la machine de transformation, avancent en continu dans la direction d'entraînement. Ils sont automatiquement imprimés par flexographie, découpés et refoulés, pliés et assemblés par collage, de façon à former les caisses.

Dans la présente demande, le terme élément en plaque désigne un produit globalement plat composé d'au moins un matériau, tel que papier, carton ou polymère, adapté pour recevoir une couche d'impression et pour former des conteneurs d'emballage. Le terme élément en plaque désigne ainsi des feuilles de carton, du carton ondulé, du carton ondulé contrecollé, du carton en plaques, du plastique flexible, tel que du polyéthylène (PE), du polyéthylène téréphtalate (PET), du polypropylène biorienté (BOPP).

Dans ces machines de transformation, il existe de larges tapis ou bandes de transport sans fin, qui ont pour fonction de transporter des cartons en plaque dans une machine de transformation. La largeur de la bande est d'environ 2 m. Une telle bande de transport comprend un corps de bande flexible et présente deux bords longitudinaux et deux- bords de jonction. Les bords de jonction sont solidarisés l'un à l'autre par de la colle. Après collage des bords de jonction, la bande présente un contour fermé, ce qui permet de faire tourner sans fin la bande par l'intermédiaire d'organes d'entraînement appartenant à la machine de transformation.

En général, une machine de transformation fonctionne de manière continue sur une grande amplitude horaire, souvent 24 h sur 24. La bande a une durée de service d'environ 1 an à 2 ans, en raison de son usure par les cartons et de la perte de ses propriétés mécaniques. La fin de service d'une bande peut être planifiée ou non, selon que le remplacement de la bande est prévu avant sa rupture ou que la rupture de la bande survient de manière inopinée.

Cependant, en vue d'une opération de remplacement, la bande de l'art antérieur est livrée en contour fermé, donc avec ses bords de jonction déjà collés. Pour installer la bande neuve, il est donc nécessaire de démonter de nombreux composants de la machine de transformation, en particulier les arbres d'entraînement de la bande. Puis la nouvelle bande est installée et les composants qui ont été démontés au préalable sont remontés.

Par conséquent, le remplacement d'une bande de l'art antérieur dure environ 48 h, ce qui représente une longue interruption de production. En particulier, cette longue interruption perturbe considérablement la production lorsque la rupture de la bande survient de manière inopinée.

### Etat de la technique

On connaît d'après les documents JP 2003156102, DE 202012008090, WO 90/10165 et EP 1477704 une bande de transport munie de deux bords de jonction et d'un organe d'assemblage. Les bords de jonction ainsi que l'organe s'étendent de biais par rapport à la direction longitudinale.

Cependant, une telle bande de transport s'avère inutilisable dans une machine de transformation nécessitant un maintien ferme et précis d'un élément en plaque contre la bande.

On connaît aussi d'après le document DE3626244 A1 une bande de transport. Le corps de cette bande présente une multitude de perforations permettant d'obtenir une dépression sur sa face de support.

### Exposé de l'invention

Un objectif principal de la présente invention consiste à mettre au point une bande de transport qui puisse être facilement montée et démontée. La présente invention vise notamment à résoudre, totalement ou partiellement, les problèmes mentionnés ci-avant. Un autre objectif encore est celui de réussir à monter une bande de transport dans une machine de transformation d'éléments en plaque.

Une bande de transport est adaptée pour transporter des éléments en plaque, dans une machine de transformation de ces éléments en plaque. La bande de transport comprend un corps de bande. Le corps de bande présente des bords longitudinaux, des bords de jonction, et une face de support, conformée pour supporter les éléments. La bande de transport comprend au moins un organe d'assemblage, agencé de façon à joindre les bords de jonction, et s'étendant suivant une direction d'assemblage oblique par rapport à la direction longitudinale.

La bande est caractérisée en ce que le corps de bande présente une multitude de perforations permettant d'obtenir une dépression sur la face de support, de façon à immobiliser les éléments en plaque sur la face de support.

La direction longitudinale est définie en faisant référence au sens de défilement ou d'entraînement des éléments en plaque dans la machine de transformation, selon leur axe longitudinal médian, avec la bande de transport.

Le terme registre désigne le positionnement des éléments en plaque par rapport aux dispositifs de transformation qui équipent la machine de transformation. En particulier, dans le cas d'un équipement d'impression par quadrichromie, le registre désigne la coïncidence entre les points des quatre couleurs appliquées sur un élément en plaque.

Ainsi, une telle bande de transport permet, tout en permettant de conserver un bon registre, de rendre plus productive la machine de transformation, car la durée de remplacement de la bande de transport est significativement réduite grâce à sa jonction par un organe d'assemblage.

En effet, la bande de transport est livrée à l'état développé, c'est-à-dire avec les bords de jonction libres, car pas encore assemblés. Donc la mise en place d'une bande de transport conforme à l'invention sur la machine de transformation ne nécessite le démontage que d'un petit nombre de composants de la machine de transformation. Typiquement, la durée de remplacement d'une bande de transport conforme à l'invention peut être d'environ 2 h, au lieu de 48 h pour une bande de l'art antérieur. Cette durée est réduite aussi bien en cas d'intervention planifiée qu'en cas d'intervention non planifiée.

Les perforations permettent de maintenir fermement les éléments en plaque plaqués sur le corps de bande. Le registre est ainsi garanti à la fois par l'assemblage de biais qui réduit les dérives latérales du corps de bande entraîné, et par la dépression maintenant les éléments en plaque par rapport aux dispositifs de transformation qui exercent une action sur ces mêmes éléments en plaque.

Selon un autre aspect encore de l'invention, une machine de transformation d'éléments en plaque, telle qu'une machine d'impression, comprend au moins une bande de transport présentant une ou plusieurs caractéristiques techniques décrites et revendiquées ci-dessous, montée autour d'un caisson apte à générer une dépression, sur la face de support du corps de la bande.

Ainsi, une telle machine de transformation permet d'augmenter la durée de production ainsi que sa rentabilité, car elle réduit la durée d'interruption de production pour remplacer la bande de transport. Le registre est conservé grâce au caisson à dépression ou caisson vacuum.

### Brève description des dessins

La présente invention sera bien comprise et ses avantages ressortiront aussi à la lumière de la description qui va suivre, donnée uniquement à titre d'exemple non limitatif et faite en référence aux dessins annexés, dans lesquels :
- la Figure 1 est une vue en perspective partielle d'une machine de transformation comprenant une bande de transport selon l'invention;
- la Figure 2 est une vue en perspective de la bande de transport, montée dans la machine de transformation de la Figure 1;
- la Figure 3 est une vue de face de la bande de transport déroulée;
- la Figure 4 est une coupe suivant le segment IV de la Figure 3;
- la Figure 5 est une vue agrandie d'un bord de jonction;
- la Figure 6 est une vue agrandie des deux bords de jonction de la bande assemblée;
- la Figure 7 est une vue en perspective à grande échelle illustrant une partie d'un organe d'assemblage de la bande à l'état désassemblée;
- la Figure 8 est une vue de l'organe d'assemblage de la Figure 7 de la bande à l'état assemblée;
- la Figure 9 est une vue illustrant une partie de la bande de transport de la Figure 3 avant son assemblage.

### Exposé détaillé des modes de réalisation préférés

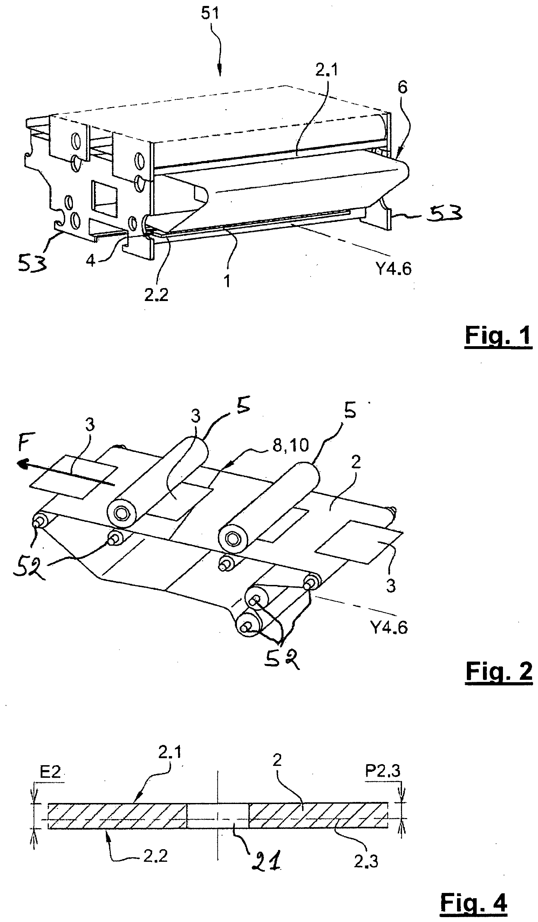

Comme le montrent les Fig. 1 et 2, une machine de transformation 51 comprend une bande de transport 1. La machine de transformation 51 est dans ce cas une machine d'impression par quadrichromie qui a notamment pour fonction d'imprimer des motifs en couleurs sur des éléments en plaque, i.e. des cartons en plaques 3. Les cartons 3 sont entraînés (Flèche F en Fig. 2) par la bande 1, selon une direction longitudinale Y4.6. La machine d'impression 51 comprend des cylindres d'impression successifs 5, tels que des cylindres porte-cliché pour une impression flexo.

La machine 51 comprend une série de rouleaux d'entraînement, de renvoi et de mise en tension 52, pour entraîner et maintenir en tension la bande 1. Ces rouleaux 52 sont maintenus pour rotation par des paliers et des bâtis latéraux 53. Un caisson vacuum ou caisson apte à générer une dépression est monté sous la bande 1 entre les bâtis 53.

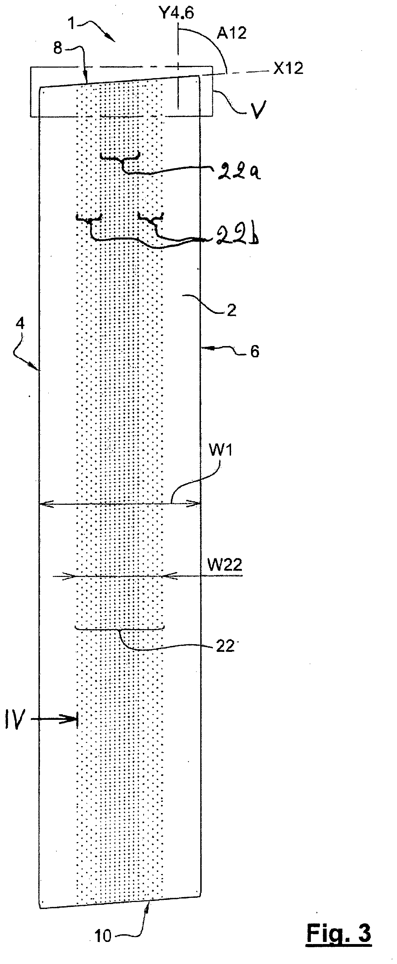

Comme le montre la Fig. 3, la bande de transport 1 comprend un corps de bande 2, lequel est ici du type à trois plis. La bande de transport 1 présente deux bords longitudinaux 4 et 6 et deux bords dits de jonction 8 et 10. Dans l'exemple des Figs. 3 à 9, les bords longitudinaux 4 et 6 et les bords de jonction 8 et 10 sont rectilignes. Les bords longitudinaux 4 et 6 s'étendent parallèlement à une direction longitudinale Y4.6. En service, la direction longitudinale Y4;6 est parallèle et correspondent à la direction d'avancée des cartons 3 dans la machine de transformation 51.

Le corps de bande 2 est ici composé de tissus en polyester et d'un revêtement en polyuréthane. Le corps de bande 2 est adapté au transport de cartons 3, car son coefficient de frottement permet de maintenir les cartons 3. La bande de transport 1 a une largeur W1 d'environ 2 m perpendiculairement à la direction longitudinale Y4.6. La bande de transport 1 a une longueur développée L1 d'environ 10,5 m selon la direction longitudinale Y4.6.

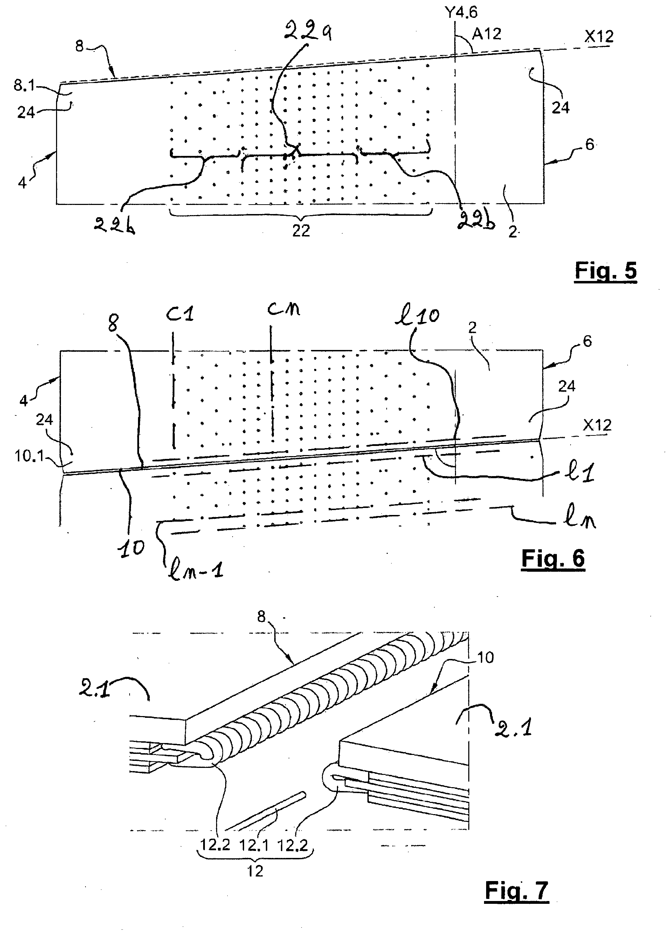

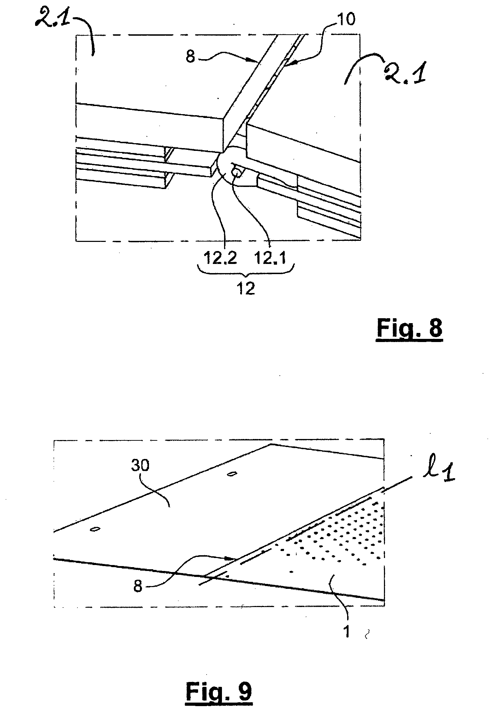

En outre, la bande de transport 1 comprend un organe d'assemblage (voir Figs. 7 et 8), dans ce cas un organe d'agrafage 12. L'organe d'agrafage 12 comprend un jonc d'agrafage 12.1 et deux séries de boucles 12.2. Chaque série de boucle 12.2 est liée à un bord de jonction respectif 8 ou 10. L'organe d'agrafage 12 est agencé de façon à joindre les bords de jonction 8 et 10. L'organe d'agrafage 12 est ici composé de tissus en polyester et de boucles en polyamide. Ainsi, l'organe d'agrafage 12 a une résistance mécanique élevée pour un poids et un coût faible.

Comme le montre la Fig. 4, le corps de bande 2 présente une face de support 2.1 qui est conformée pour supporter les cartons 3, et une face de roulement 2.2, conformée pour coopérer avec les organes d'entraînement de la machine de transformation 51. L'organe d'agrafage 12 est disposé entre la face de support 2.1 et la face de roulement 2.2, de sorte que l'organe d'agrafage 12 est en retrait par rapport à la face de support 2.1 et est en retrait par rapport à la face de roulement 2.2. L'organe d'agrafage 12 ne fait saillie ni sur la face de support 2.1 ni sur la face de roulement 2.2, de façon à ne pas gêner le défilement de la bande 1.

Le corps de bande 2 a une épaisseur E2, par exemple d'environ 3,7 mm. Le corps de bande 2 a une fibre neutre 2.3 qui est située à la même profondeur P2.3 que le jonc d'agrafage 12.1.

En d'autres termes, l'organe d'agrafage 12 est noyé dans l'épaisseur de la bande de transport 1. Ainsi, l'organe d'agrafage 12 permet d'avoir une continuité des caractéristiques de la bande de transport 1 au niveau des bords de jonction 8 et 10, en particulier du coefficient de frottement.

Après jonction des bords de jonction 8 et 10 par l'organe d'agrafage 12, la bande de transport 1 présente un contour fermé, ce qui permet de faire tourner sans fin la bande de transport 1 par l'intermédiaire des rouleaux 52.

Comme le montrent les Figs. 2, 6 et 8, lorsque la bande de transport 1 est assemblée, le jonc d'agrafage 12.1 s'étend suivant une direction d'agrafage X12 qui est oblique par rapport à la direction longitudinale Y4.6. La direction d'agrafage X12 est ici rectiligne, ce qui permet une fabrication simple des bords de jonction 8 et 10 et un assemblage rapide de l'organe d'agrafage 12 dans la bande de transport 1.

La direction d'agrafage X12 forme avec la direction longitudinale Y4.6 un angle d'agrafage A12 aigu égal à 86 degrés. Corollairement, la direction d'agrafage X12 forme avec la direction longitudinale Y4.6 un angle obtus égal à 94 degrés, cet angle obtus étant l'angle supplémentaire à l'angle d'agrafage A12. Ainsi, l'angle d'agrafage A12 permet d'optimiser le rapport entre la qualité du registre et le glissement latéral de la bande de transport 1.

Le corps de bande 2 présente une multitude de perforations 21 réparties dans une région médiane 22 qui s'étend entre les bords longitudinaux 4 et 6. Ces perforations permettent d'obtenir une dépression sur la face de support 2.1, de façon à plaquer et à immobiliser les cartons 3 par rapport à la bande de transport 1. La région médiane 22 a ici une largeur W22 d'environ 1,1 m perpendiculairement à la direction longitudinale Y4.6, ce qui représente environ 50% de la largeur W1 de la bande de transport 1.

Les perforations 21 sont préférentiellement réparties dans une région médiane 22 s'étendant entre les bords longitudinaux 4 et 6. La région médiane possède une largeur W22, mesurée perpendiculairement aux bords longitudinaux 4 et 6, représentant entre 30% et 70% de la largeur W1 du corps de bande 2.

Les perforations 21 sont réparties en trois zones longitudinales, divisant en trois la région médiane 22 selon la longueur. Les trois zones sont une zone longitudinale centrale 22a et deux zones longitudinales latérales 22b. Les deux zones latérales 22b sont situées de part et d'autre de la zone centrale 22a.

La zone centrale 22a présente une forte densité de perforations 21. Les deux zones latérales 22b présentent une plus faible densité de perforations 21. Ce différentiel de densité permet de maintenir de manière équivalente des cartons 3. La dépression obtenue avec les perforations 21 est constante pour les cartons 3 présentant une petite laize recouvrant uniquement la zone centrale 22a. La dépression obtenue avec les perforations 21 est constante et est équivalente pour les cartons 3 présentant une laize plus grande recouvrant à la fois la zone centrale 22a et les zones latérales 22b.

Les perforations 21 sont ménagées sur plusieurs lignes successives l1 à ln, de façon à constituer un pattern régulier et pour faciliter le travail de préparateur de la bande 1. De manière préférentielle, les lignes l1 à ln de perforations 21 sont sensiblement parallèles entre-elles et sensiblement parallèles à la direction d'assemblage X12. Les perforations 21 sont ménagées sur plusieurs colonnes successives c1 à cn, de façon à constituer un pattern régulier. Les colonnes c1 à cn de perforations 21 sont sensiblement parallèles entre-elles, longitudinales, parallèles à la direction longitudinale Y4.6, et ainsi sensiblement parallèles aux bords longitudinaux 4 et 6. Cette disposition des lignes l1 à ln et des colonnes c1 à cn les unes par rapport aux autres permet d'homogénéiser la dépression obtenue à la surface de support 2.1.

Des perforations 21 sont avantageusement ménagées à proximité immédiate de l'organe d'assemblage 12. Autrement dit, le corps 2 présente une ligne de perforation l1 qui vient au plus près de l'un des bords de jonction 8. Il en est de même pour l'autre des bords de jonction 10. En gardant des perforations 21 proches des bords de jonction 8 et 10, il n'y a pas de discontinuité pour la dépression lorsque la bande 1 est assemblée par agrafage. De ce fait un carton 3 positionné sur la jonction au niveau des bords de jonction 8 et 10 va être maintenu par la dépression de manière équivalente à un carton 3 positionné à un autre endroit sur la surface de support 2.1 du corps de bande 1.

Les perforations 21 sont prévues, de sorte qu'une distance la plus courte entre une perforation 21 ménagée au niveau de l'un des bords de jonction 8 et une autre perforation 21 contiguë, et ménagée au niveau de l'autre des bords de jonction 10 est sensiblement égale à une distance la plus courte entre deux autres perforations 21 contiguës, ménagées dans le corps de bande 2. De manière équivalente, la distance entre la ligne de perforations l1 la plus proche de l'un des bords de jonction 8 et la ligne de perforations l10 la plus proche de l'autre des bords de jonction 10 est sensiblement équivalente à la distance entre deux lignes contiguës ln-1 et ln (voir Fig. 6).

Le corps de bande 2 présente quatre orifices 24 situés respectivement près des bords longitudinaux 4 et 6 (voir Figs. 5 et 6). Chaque orifice 24 est traversant, c'est-à-dire qu'il débouche sur la face de support 2.1 et sur la face de roulement 2.2. Chaque orifice 24 est conformé pour le passage d'un ergot respectif, non représenté, qui est destiné à tenir le corps de bande 2 lors de l'assemblage de l'organe d'agrafage 12.

Ainsi, la bande de transport 1 permet de rendre plus productive la machine de transformation 51, car la durée de remplacement de la bande de transport 1 est significativement réduite grâce à sa jonction par un organe d'agrafage 12. La durée de remplacement de la bande de transport 1 est ici d'environ 2 h.

Pour remplacer une bande de transport endommagée, la bande de transport 1 est livrée à l'état développé, avec les bords de jonction 8 et 10 libres. Seuls quelques composants de la machine de transformation sont démontés pour permettre de mettre en place la bande de transport 1.

Un procédé d'assemblage de la bande de transport 1 comprend les étapes décrites ci-dessous. La bande de transport 1 est livrée à l'état développé, c'est-à-dire avec les bords de jonction 8 et 10 disjoints.

Les bords de jonction 8 et 10 sont individuellement protégés par une bande de manutention 30, qui est visible à la Fig. 9 et qui est fixée aux bords de jonction 8 et 10. Chaque bande de manutention 30 a la même largeur W1 que la bande de transport 1. Chaque bande de manutention 30 a un bord de jonction muni d'un organe d'agrafage non représenté qui est similaire à l'organe d'agrafage 12 de la bande de transport 1.

Les bandes de manutention 30 sont découpées afin de servir de points d'attache aux sangles nécessaires à la mise en place dans la machine de transformation 51. Les bandes de manutention 30 sont aussi une protection indispensable au montage aisé du jonc d'agrafage 12.1 sur une bande de transport 1 de largeur W1 comprise entre 1 m et 3 m.

La bande de transport 1 muni de ses deux bandes de manutention 30 est mise en place dans la machine de transformation 51. Les deux bandes de manutention 30 sont ensuite enlevées, ce qui libère les bords de jonction 8 et 10, et ce qui permet l'assemblage de la bande transport 1.

La présente invention n'est pas limitée aux modes de réalisation décrits et illustrés. De nombreuses modifications peuvent être réalisées, sans pour autant sortir du cadre défini par la portée du jeu de revendications.

## Revendications

1. Bande de transport (1), adaptée pour transporter des éléments en plaque (3), dans une machine de transformation des éléments (51), comprenant:
- un corps de bande (2), présentant des bords longitudinaux (4, 6), des bords de jonction (8, 10), et une face de support (2.1), conformée pour supporter les éléments (3), et
- au moins un organe d'assemblage (12), agencé de façon à joindre les bords de jonction (8, 10), et s'étendant suivant une direction d'assemblage (X12) oblique par rapport à la direction longitudinale (Y4.6),
**caractérisée en ce que** le corps de bande (2) présente une multitude de perforations (21), permettant d'obtenir une dépression sur la face de support (2.1), de façon à immobiliser les éléments (3), et étant ménagées à proximité immédiate de l'organe d'assemblage (12), de sorte qu'une distance la plus courte entre une perforation ménagée au niveau de l'un des bords de jonction (8) et une autre perforation ménagée au niveau de l'autre des bords de jonction (10) est sensiblement égale à une distance la plus courte entre deux perforations ménagées dans le corps de bande (2).

2. Bande selon la revendication 1, dans laquelle les perforations (21) sont réparties en trois zones (22a, 22b), une zone centrale (22a), présentant une forte densité de perforations (21), et deux zones latérales (22b), de part et d'autre de la zone centrale (22a), et présentant une plus faible densité de perforations (21).

3. Bande de transport (1), adaptée pour transporter des éléments en plaque (3), dans une machine de transformation des éléments (51), comprenant:
- un corps de bande (2), présentant des bords longitudinaux (4, 6), des bords de jonction (8, 10), et une face de support (2.1), conformée pour supporter les éléments (3), et
- au moins un organe d'assemblage (12), agencé de façon à joindre les bords de jonction (8, 10), et s'étendant suivant une direction d'assemblage (X12) oblique par rapport à la direction longitudinale (Y4.6),
**caractérisée en ce que** le corps de bande (2) présente une multitude de perforations (21), permettant d'obtenir une dépression sur la face de support (2.1), de façon à immobiliser les éléments (3), et étant réparties en trois zones (22a, 22b), une zone centrale (22a), présentant une forte densité de perforations (21), et deux zones latérales (22b), de part et d'autre de la zone centrale (22a), et présentant une plus faible densité de perforations (21).

4. Bande selon la revendication 3, dans laquelle des perforations (21) sont ménagées à proximité immédiate de l'organe d'assemblage (12), de sorte qu'une distance la plus courte entre une perforation ménagée au niveau de l'un des bords de jonction (8) et une autre perforation ménagée au niveau de l'autre des bords de jonction (10) est sensiblement égale à une distance la plus courte entre deux perforations ménagées dans le corps de bande (2).

5. Bande selon l'une des revendications précédentes, dans laquelle la direction d'assemblage (X12) forme avec la direction longitudinale (Y4.6) un angle d'assemblage (A12) aigu compris sensiblement entre 75° et 88°, de préférence compris sensiblement entre 85° et 87°, très préférentiellement sensiblement égal à 86°.

6. Bande selon l'une des revendications précédentes, dans laquelle la direction d'assemblage (X12) est rectiligne.

7. Bande selon l'une des revendications précédentes, dans laquelle les perforations (21) sont ménagées sur plusieurs lignes (l1, l10, ln-1, ln).

8. Bande selon la revendication 7, dans laquelle les lignes (l1, l10, ln-1, ln) sont sensiblement parallèles à la direction d'assemblage (X12).

9. Bande selon l'une des revendications précédentes, dans laquelle les perforations (21) sont réparties dans une région médiane (22) s'étendant entre les bords longitudinaux (4, 6), et ayant une largeur (W22), mesurée perpendiculairement aux bords longitudinaux (4, 6), représentant entre 30% et 70% de la largeur (W1) du corps de bande (2).

10. Bande selon l'une des revendications précédentes, dans laquelle le corps de bande (2) présente au moins deux orifices (24), de préférence situés près d'un bord longitudinal respectif (4, 6), chaque orifice (24) étant conformé pour le passage d'un ergot respectif destiné à tenir le corps de bande (2) lors de l'assemblage de l'organe d'assemblage (12).

11. Bande selon l'une des revendications précédentes, dans laquelle le corps de bande (2) présente une face de roulement (2.2), conformée pour coopérer avec des organes d'entraînement de façon à entraîner la bande de transport (1), l'organe d'assemblage (12) étant disposé entre la face de support (2.1) et la face de roulement (2.2), de sorte que l'organe d'assemblage (12) est en retrait par rapport à la face de support (2.1) et à la face de roulement (2.2).

12. Bande selon l'une des revendications précédentes, dans laquelle le corps de bande (2) est composé d'un matériau polymère et/ou d'un matériau élastomère, de préférence en tissus en polyester et d'un revêtement en polyuréthane.

13. Machine de transformation des éléments (51), telle qu'une machine d'impression, comprenant au moins une bande de transport (1) selon l'une des revendications précédentes, montée autour d'un caisson apte à générer une dépression, sur la face de support (2.1).

## Patentansprüche

1. Transportband (1), das geeignet ist, um Plattenelemente (3) zu einer Maschine zur Verarbeitung von Elementen (51) zu transportieren, umfassend:
- einen Bandkörper (2), der Längskanten (4, 6), Verbindungskanten (8, 10) und eine Stützfläche (2.1) aufweist, die angepasst ist, um die Elemente (3) abzustützen, und
- mindestens ein Montageelement (12), das so angeordnet ist, dass es die Verbindungskanten (8, 10) verbindet und sich in einer Montagerichtung (X12) schräg mit Bezug auf die Längsrichtung (Y4.6) erstreckt,
**dadurch gekennzeichnet, dass** der Bandkörper (2) mehrere Perforationen (21) aufweist, die es ermöglichen, eine Vertiefung auf der Stützfläche (2.1) zu erhalten, um die Elemente (3) zu immobilisieren, und in unmittelbarer Nähe des Montageelements (12) ausgebildet sind, so dass ein kürzester Abstand zwischen einer Perforation, die bei einer der Verbindungskanten (8) ausgebildet ist, und einer anderen Perforation, die bei der anderen der Verbindungskanten (10) ausgebildet ist, im Wesentlichen gleich einem kürzesten Abstand zwischen zwei Perforationen ist, die in dem Bandkörper (2) ausgebildet sind.

2. Band nach Anspruch 1, wobei die Perforationen (21) in drei Zonen (22a, 22b), eine zentrale Zone (22a), die eine hohe Dichte von Perforationen (21) aufweist, und zwei seitliche Zonen (22b) auf jeder Seite der zentralen Zone (22a), die eine niedrigere Dichte von Perforationen (21) aufweisen, unterteilt sind.

3. Transportband (1), das geeignet ist, um Plattenelemente (3) zu einer Maschine zur Verarbeitung von Elementen (51) zu transportieren, umfassend:
- einen Bandkörper (2), der Längskanten (4, 6), Verbindungskanten (8, 10) und eine Stützfläche (2.1) aufweist, die angepasst ist, um die Elemente (3) abzustützen, und
- mindestens ein Montageelement (12), das so angeordnet ist, dass es die Verbindungskanten (8, 10) verbindet und sich in einer Montagerichtung (X12) schräg mit Bezug auf die Längsrichtung (Y4.6) erstreckt,
**dadurch gekennzeichnet, dass** der Bandkörper (2) mehrere Perforationen (21) aufweist, die es ermöglichen, eine Vertiefung auf der Stützfläche (2.1) zu erhalten, um die Elemente (3) zu immobilisieren, und in drei Zonen (22a, 22b), eine zentrale Zone (22a), die eine hohe Dichte von Perforationen (21) aufweist, und zwei seitliche Zonen (22b) auf jeder Seite der zentralen Zone (22a), die eine niedrigere Dichte von Perforationen (21) aufweisen, unterteilt sind.

4. Band nach Anspruch 3, wobei Perforationen (21) in unmittelbarer Nähe des Montageelements (12) angeordnet sind, so dass ein kürzester Abstand zwischen einer Perforation, die bei einer der Verbindungskanten (8) ausgebildet ist, und einer anderen Perforation, die bei der anderen der Verbindungskanten (10) ausgebildet ist, im Wesentlichen gleich einem kürzesten Abstand zwischen zwei Perforationen ist, die in dem Bandkörper (2) ausgebildet sind.

5. Band nach einem der vorhergehenden Ansprüche, wobei die Montagerichtung (X12) mit der Längsrichtung (Y4.6) einen spitzen Montagewinkel (A12) bildet, der im Wesentlichen zwischen 75° und 88°, vorzugsweise im Wesentlichen zwischen 85° und 87°, sehr bevorzugt im Wesentlichen bei gleich 86°, liegt.

6. Band nach einem der vorhergehenden Ansprüche, wobei die Montagerichtung (X12) geradlinig ist.

7. Band nach einem der vorhergehenden Ansprüche, wobei die Perforationen (21) auf mehreren Linien (l1, l10, ln-1, ln) angeordnet sind.

8. Band nach Anspruch 7, wobei die Linien (l1, l10, ln-1, In) im Wesentlichen parallel zu der Montagerichtung (X12) sind.

9. Band nach einem der vorhergehenden Ansprüche, wobei die Perforationen (21) in einem mittleren Bereich (22) verteilt sind, der sich zwischen den Längskanten (4, 6) erstreckt und eine Breite (W22) hat, die senkrecht zu den Längskanten (4, 6) gemessen wird und zwischen 30 % und 70 % der Breite (W1) des Bandkörpers (2) darstellt.

10. Band nach einem der vorhergehenden Ansprüche, wobei der Bandkörper (2) mindestens zwei Öffnungen (24) aufweist, die sich vorzugsweise in der Nähe einer jeweiligen Längskante (4, 6) befinden, wobei jede Öffnung (24) für den Durchgang eines jeweiligen Zapfens angepasst ist, der zum Halten des Bandkörpers (2) während der Montage des Montageorgans (12) bestimmt ist.

11. Band nach einem der vorhergehenden Ansprüche, wobei der Bandkörper (2) eine Rollfläche (2.2) aufweist, die so angepasst ist, dass sie mit Antriebsorganen zusammenwirkt, um das Förderband (1) anzutreiben, wobei das Montageorgan (12) zwischen der Stützfläche (2.1) und der Rollfläche (2.2) angeordnet ist, so dass das Montageorgan (12) in Bezug auf die Stützfläche (2.1) und die Rollfläche (2.2) zurück liegt.

12. Band nach einem der vorhergehenden Ansprüche, wobei der Bandkörper (2) aus einem polymeren Material und / oder einem elastomeren Material, vorzugsweise Polyestergewebe und einer Polyurethanbeschichtung, besteht.

13. Maschine zur Verarbeitung von Elementen (51), wie eine Druckmaschine, umfassend mindestens ein Förderband (1) nach einem der vorhergehenden Ansprüche, das um einen Kasten herum, der geeignet ist, eine Vertiefung zu erzeugen, auf der Stützfläche (2.1) angebracht ist.

## Claims

1. Conveyor belt (1) adapted to transport plate-shaped elements (3) to a processing machine of said elements (51), comprising:
- a belt body (2) featuring longitudinal edges (4, 6) and junction edges (8, 10), and a support surface (2.1), configured to support the elements (3), and
- at least one assembly member (12), arranged to join the junction edges (8, 10) and extending in an assembly direction (X12) obliquely with respect to the longitudinal direction (Y4.6),
**characterised in that** the belt body (2) features a multitude of perforations (21) generating a depression on the support surface (2.1) that immobilises the elements (3), and whereby said perforations are made in the immediate vicinity of the assembly member (12) so that the shortest distance between a perforation made at the level of one of the junction edges (8) and another perforation made at the level of the other junction edge (10) is roughly equal to the shortest distance between two perforations in the belt body (2).

2. Belt according to claim 1, in which the perforations (21) are distributed in three zones (22a, 22b), where a central zone (22a) features a high concentration of perforations (21), and where two side zones (22b) on either side of the central zone (22a) feature a lower concentration of perforations (21).

3. Conveyor belt (1) adapted to transport plate-shaped elements (3) to a processing machine of said elements (51), comprising:
- a belt body (2) featuring longitudinal edges (4, 6) and junction edges (8, 10), and a support surface (2.1), configured to support the elements (3), and
- at least one assembly member (12), arranged to join the junction edges (8, 10) and extending in an assembly direction (X12) obliquely with respect to the longitudinal direction (Y4.6),
**characterised in that** the belt body (2) features a multitude of perforations (21) generating a depression on the support surface (2.1) that immobilises the elements (3), and where said perforations are distributed in three zones (22a, 22b), where a central zone (22a) features a high concentration of perforations (21), and where two side zones (22b) on either side of the central zone (22a) feature a lower concentration of perforations (21).

4. Belt according to claim 3, in which the perforations (21) are made in the immediate vicinity of an assembly member (12) so that the shortest distance between a perforation made at the level of one of the junction edges (8) and another perforation made at the level of the other junction edge (10) is roughly equal to the shortest distance between two perforations in the belt body (2).

5. Belt according to one of the previous claims, in which the assembly direction (X12) forms with the longitudinal direction (Y4.6) an acute assembly angle (A12) ranging roughly between 75° and 88°, and preferentially between roughly 85° and 87°, and very preferentially roughly equal to 86°.

6. Belt according to one of the previous claims, in which the assembly direction (X12) is rectilinear.

7. Belt according to one of the previous claims, in which the perforations (21) are arranged on several lines (l1, l10, ln-1, In).

8. Belt according to claim 7, in which the lines (l1, l10, ln-1, In) are roughly parallel to the assembly direction (X12).

9. Belt according to one of the previous claims, in which the perforations (21) are distributed in a median area (22) extending between the longitudinal edges (4, 6) and featuring a width (W22) measured perpendicularly to the longitudinal edges (4, 6) and representing between 30% and 70% of the width (W1) of the belt body.

10. Belt according to one of the previous claims, in which the belt body (2) features at least two orifices (24), preferentially located close to a respective longitudinal edge (4, 6), where each orifice (24) is configured to allow the passage of a respective lug intended to secure the belt body (2) during the assembly of the assembly member (12).

11. Belt according to one of the previous claims, in which the belt body (2) features a rolling surface (2.2) configured to cooperate with the driving members to drive the conveyor belt (1), whereby the assembly member (12) is arranged between the support surface (2.1) and the rolling surface (2.2), so that the assembly member (12) is recessed with respect to the support surface (2.1) and the rolling surface (2.2).

12. Belt according to one of the previous claims, in which the belt body (2) is made of a polymer and/or elastomer material, preferentially in polyester fabric and a polyurethane coating.

13. Element processing machine (51) such as a printing machine comprising at least one conveyor belt (1) according to one of the previous claims, mounted around a box capable of generating a depression on the support surface (2.1).
